# EUROPEAN PATENT SPECIFICATION

(11) **EP 0 868 363 B1**
(45) Date of publication and mention of the grant of the patent: **26.11.2003**
(21) Application number: 96943459.6
(22) Date of filing: 18.12.1996
(51) Int. Cl.: B65D 65/40, B65D 5/56, B32B 27/10

(54) **METHOD OF PRODUCING A LAMINATED PACKAGING MATERIAL**
VERFAHREN ZUR HERSTELLUNG EINES MEHRSCHICHTIGEN VERPACKUNGSMATERIALS
PROCEDE DE PRODUCTION D'UN MATERIAU D'EMBALLAGE MULTICOUCHE

(30) Priority: 20.12.1995 DK 144595
(43) Date of publication of application: 07.10.1998
(73) Proprietor: Tetra Laval Holdings & Finance SA, 1009 Pully (CH)
(72) Inventor: BERLIN, Mikael, S-227 36 Lund (SE); LETH, Ib, S-273 64 Kävlinge (SE); BENTMAR, Mats, S-233 37 Svedala (SE)
(74) Representative: Sundell, Hakan
(86) International application number: SE9601707
(87) International publication number: WO97022536

(56) References cited:
- EP-A- 0 381 922
- EP-A- 0 423 511
- WO-A-93/12924
- WO-A-96/20832
- DE-A- 3 233 693
- US-A- 4 418 119
- US-A- 4 753 845
- US-A- 5 389 724
- DERWENT'S ABSTRACT, No. 97-061366, Week 9706; & JP,A,08 310 546 (KUREHA CHEM IND CO LTD), 26 November 1996.
- DERWENT'S ABSTRACT, No. 94-106393, Week 9413; & JP,A,06 055 702 (GOYO SHIKO KK), 1 March 1994.
- PATENT ABSTRACTS OF JAPAN, Vol. 018, No. 289; & JP,A,06 055 702, (GOYO PAPER WORKING CO LTD) 01-03-94.

## Description

### TECHNICAL FIELD

The present invention relates to a laminated packaging material comprising a core layer and a layer of polyvinyl alcohol applied on one side of the core layer and acting as oxygen gas barrier. The present invention further relates to a method of producing the laminated packaging material, as well as to packaging containers which are produced from the laminated packaging material. A laminated packaging material and a method of producing said material in accordance with the preamble portion of claim 1 is disclosed in EP-A1 0 423 511. See also US-A-5 399 724, JP-A-6 055 702, WO-A1-9 312 924, and DE-A1-3 233 693.

### BACKGROUND ART

Within packaging technology, use has long been made of packages of the disposable type (so-called single use packages) for packing and transporting products such as, for example, liquid foods.

A very large group of these single use disposable packages is produced from a laminated packaging material which comprises a core layer of paper or paperboard and outer, liquid-tight coatings of plastic, preferably polyethylene, on both sides of the core layer.

The point of departure and prime object of the composition of the packaging material is to impart to the package the best possible product protection properties for the packed product, at the same time as rendering the package both easy to manufacture and easy to handle. A core layer of paper or paperboard imparts to the package superior mechanical configurational stability so that the package can be distributed in a simple, rational manner and be conveniently handled, at the same time as outer, liquid-tight coatings of plastic efficiently protect the liquid-absorbent fibre layer against penetration of moisture and liquid which otherwise would rapidly weaken and destroy the fibre layer and thereby render the package sloppy and unusable. Preferably, the outer, liquid-tight plastic layers consist of a thermoplastic, ideally polyethylene, which moreover imparts to the laminated packaging material excellent heat-sealing properties such that the packages may be durably and permanently given their desired geometric configurations by conventional heat sealing during conversion of the laminated packaging material into finished packages.

Thus, a laminated packaging material comprising layers of paper or paperboard and plastic as described above makes for the rational production of configurationally stable, liquid-tight packages possessing superior tightness properties vis-à-vis moisture and damp, but almost entirely lack tightness properties vis-à-vis gases, in particular oxygen gas.

In order to supplement the prior art laminated paper or paperboard material with such gas tightness properties, it is known in the art to apply a layer of aluminium (Alifoil) onto one side of the core layer between the core layer and the one outer plastic coating of the packaging material. Although Alifoil is practically completely gas tight, there is a manifest risk that cracks and similar lines of weakness occur in the Alifoil, in particularly exposed and vulnerable areas when the laminated foil material is reformed into packages, because of the slight extensibility and ductility properties of the Alifoil. Moreover, Alifoil is a relatively expensive material which is a major contributory factor in increasing the production costs of the laminated packaging material.

It is also known in the art to employ alternative gas barrier materials in the above-described known paper or paperboard material. One example among such alternative gas barrier materials is polyvinyl alcohol which, like the known Alifoil, is applied as a continuous layer on the one side of the core layer between the core layer and the one outer, liquid-tight plastic coating of the laminated packaging material.

Polyvinyl alcohol enjoys several properties which render it particularly attractive as a substitute material for Alifoil. It is considerably cheaper, at the same time as a layer of polyvinyl alcohol is not as tensile- and crack-sensitive as Alifoil. Polyvinyl alcohol per se further possesses good gas barrier properties, in particular vis-à-vis oxygen gas, which are fully on a par with those of Alifoil, at the same time as polyvinyl alcohol (as opposed to aluminium) is compatible with foods and, as a result, may also be employed without legal hindrance in direct contact with a food product. However, one problem inherent in polyvinyl alcohol is that it is moisture-sensitive and rapidly loses its gas barrier properties when exposed to a humid or damp environment.

In order to avoid the loss of gas barrier properties as a result of increased humidity or moisture content, it is known in the art to employ polyvinyl alcohol in combination with so-called cross-linking agents with the aid of which the polyvinyl alcohol, by a cross-linking reaction, is cross-linked in a per se known manner for the formation of a cross-linked water resistant polyvinyl alcohol. Examples of such known cross-linking agents may be glyoxal (dialdehyde) and acid anhydrides. While cross-linking agents effectively increase the moisture and water resistance of the polyvinyl alcohol and make the polyvinyl alcohol less sensitive to a damp or humid environment, such chemical cross-linking agents may cause problems in approval or licensing for foods, at the same time as they are generally difficult to handle and may readily initiate undesired cross-linking reactions already before application to the packaging material.

Another known proposal in the art for solving the problem of moisture sensitivity of the polyvinyl alcohol is based on protecting or encapsulating the polyvinyl alcohol between surrounding or enveloping liquid-tight layers of plastic, for example polyethylene, which on the one hand contributes to rendering the finished packaging material structure unnecessarily complicated and on the other hand necessitates at least one additional application stage in connection with production of the packaging material.

### OBJECTS OF THE INVENTION

One object of the present invention is therefore to obviate the above considered drawbacks in connection with the laminated packaging materials and thus to provide a simple and rational method of producing said laminated packaging materials.

### SOLUTION

These and other objects have been attained according to the present invention by means of a method producing a laminated packaging material of the type disclosed by way of introduction, possessing the characterizing feature as set forth in the characterizing clause of appended Claim 1. Expedient embodiments of the laminated packaging material according to the present invention have further been given the characterizing features as set forth in appended subclaims 2 to 6.

### OUTLINE OF THE INVENTION

It has surprisingly proved that polyvinyl alcohol may, in a simple manner and using simple means, be combined with one or more per se known polymers which are approved and licensed for use together with foods and are of a hydrophobic nature, which advantageously in combination with polyvinyl alcohol form a continuous, well-integrated layer possessing superior gas barrier properties, in particular oxygen gas barrier properties, at the same time as the desired superior gas barrier properties of the polyvinyl alcohol are also retained even if the thus formed layer is exposed to a relatively damp or humid environment. Without being linked to any particular scientifically proven theory, the surprisingly favourable results achieved may, at least as a practical working hypothesis, be explained such that the polyvinyl alcohol in the above-mentioned mixture spreads and forms isolated islets which are surrounded and protected by the hydrophobic polymer acting as the continuous phase in the mixture. By overlapping in the transverse direction of the laminated packaging material, these islets, whose number and size are to all essentials determined by the relative proportions of each respective mixture component, form an efficient blanket barrier against the transport of gases, at the same time as the surrounding, continuous phase of hydrophobic polymer on the one hand protects the moisture and liquid-sensitive islets against the action of liquid and, on the other hand, counteracts the transport of liquid through the barrier layer in the transverse direction of the laminated packaging material from both directions.

The mixing ratio between polyvinyl alcohol and hydrophobic polymer is, as was intimated above, critical and should, according to the present invention, be such that the quantity of hydrophobic polymer must be at least 5 per cent of the total weight of the mixture. A practical range according to the present invention is between 5 and 50 per cent hydrophobic polymer (and correspondingly between 95 and 50 per cent polyvinyl alcohol), calculated on the total dry weight of the mixture. According to one preferred embodiment, the quantity of hydrophobic polymer should be 20 per cent and the quantity of polyvinyl alcohol 80 per cent.

The choice of hydrophobic polymer is not critical according to the present invention, with the exception that the hydrophobic polymer should be a polymer which is preferable from the point of view of approval and licensing for use with foods, at the same time as the selected polymer must be miscible with, polyvinyl alcohol. Suitable hydrophobic polymers are well known to persons skilled in the art, such as polyolefins or polyolefin copolymers which are devoid of cross-linking functional groups.

Suitable hydrophobic polymers are styrene-butadiene copolymers. Practical trials which have been carried out in accordance with the present invention have shown that hydrophobic polymers which are selected from among styrene butadiene copolymers are particularly well functioning and consequently are at present the most preferred examples of such hydrophobic polymers.

According to the present invention, the core layer in the laminated packaging material may be a conventional fibre layer of paper or paperboard of suitable packaging qualities. Core layers of other materials may also be employed, such as plastics. Examples of such plastics may be polyethylene, polypropylene, polyester and polyamide including plastics having both solid and foamed or expanded structure.

According to one preferred embodiment of the laminated packaging material of the present invention, the gasbarrier layer from polyvinylalcohol and a hydrophobic polymer may be applied onto the core layer by means of an intermediate plastic carrier layer. The plastic carrier layer may be a polymer layer from polyethylene, polypropylene, oriented polypropylene or polyester, such as polyethylenterephtalate (PET) or oriented polyethylenterephtalate (OPET). According to one preferred embodiment, the intermediate carrier layer is an extruded polyethylene layer, preferably from low density polyethylene (LDPE). According to another preferred embodiment, the intermediate carrier layer is an OPET premanufactured film, which in itself also has relatively good gas barrier properties.

According to the present invention, there will be realised a simple and rational method of producing the laminated packaging material. The method according to the present invention has been given the characterizing features as set forth in appended Claim 1, while expedient and practical embodiments of the method are apparent from appended subclaims 2 to 6.

### BRIEF DESCRIPTION OF THE ACCOMPANYING DRAWING

The present invention will now be described and explained in greater detail hereinbelow by means of one preferred embodiment and with reference to the accompanying Drawing, in which:
Fig. 1 schematically shows a cross section of a laminated packaging material manufactured according to one preferred embodiment of the invention; and
Fig. 2 schematically illustrates a method of producing the laminated packaging material according to the invention.

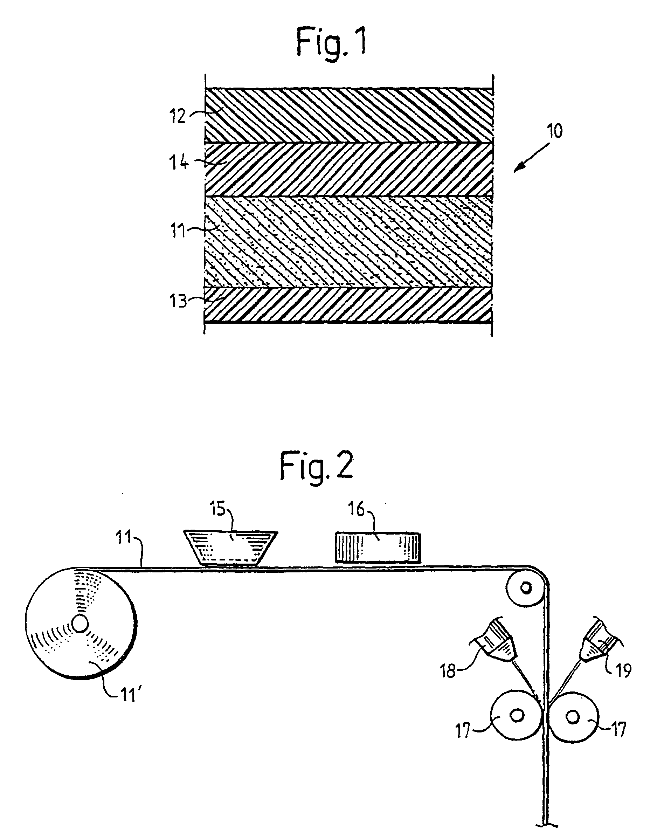

In order to avoid the risk of any possible misunderstanding, it should first be observed that the packaging material structure illustrated in Fig. 1 is by no means intended to restrict the scope of the invention, but is merely intended to show one version of a material structure according to a greatly simplified embodiment manufactured by a method according to claim 1. Thus, the number of individual layers need not be exactly four, as shown, but the layers may be both greater and fewer in number and may be freely varied in compliance with the desired final use. and application of the finished packaging material.

### DESCRIPTION OF PREFERRED EMBODIMENT

Fig. 1 thus schematically shows a cross section of a laminated packaging material according to the present invention, carrying the generic reference numeral 10. In the illustrated, simplified embodiment, the laminated packaging material comprises a core layer 11 of a fibre material or of other suitable material, for example polymer.

Examples of such fibre materials may be paper or paperboard of conventional packaging qualities, while examples of suitable polymers for the core layer 11 may be polyolefin, for example polyethylene, polypropylene and copolymers, olefin monomers, polyester, polyamide etc. In such cases in which the core layer 11 consists of a polymer, such core layer may have a homogeneous, solid structure or be a foamed or expanded polymer.

This polymer may also be a filled polymer i.e. include filler admixed into the basic polymer composition.

On both sides of the core layer 11, there are disposed outer, liquid-tight coatings 12 and 13 of plastic which need not, but preferably do consist of an extrudable thermoplastic, for example polyethylene. The choice of an extrudable thermoplastic, such as polyethylene, for the outer plastic coatings 12 and 13 helps to make the laminated packaging material 10 particularly easy to produce, at the same time as the laminated packaging material 10 becomes heat sealable in such a manner that mutually facing plastic coatings may readily be sealed or fused to one another by surface fusion by means of conventional heat sealing techniques, as will be well known to a person skilled in the art.

Between the core layer 11 and the one outer, liquid-tight plastic coating 12, there is disposed a layer 14 of polyvinyl alcohol which serves as oxygen gas barrier and which, for the purposes of making the polyvinyl alcohol layer water resistant, also includes a hydrophobic polymer.

The oxygen gas barrier layer may be laminated to the core layer by means of an intermediate polymer carrier layer. Such an intermediate polymer carrier layer, of for example polyethylene, may be coated separately onto the core layer 11 in a first step, preferably by extrusion coating, onto which the gas barrier layer 14 thereafter is applied in a second step. The intermediate polymer carrier layer may also be applied onto a premanufactured polymer film, preferably of polyester, such as for example a film of OPET, in a first step, which is then laminated to a polymer coated core layer 11 in a second step.

The choice of hydrophobic polymer is not critical , but preferably a hydrophobic polymer is selected which has documented, approved properties in the context of use together with foods. Examples of such preferred hydrophobic polymers may be styrene butadiene copolymers.

As was mentioned previously, the mixing ratio between the polyvinyl alcohol and the hydrophobic polymer in the polyvinyl alcohol layer 14 must be such that the quantity of polyvinyl alcohol is sufficient to form a blanket protection against gas transport, in particular oxygen gas transport, in the transverse direction through the laminated packaging material 10, at the same time as the quantity of hydrophobic polymer must be sufficient to form a continuous phase which, on the one hand, efficiently protects the polyvinyl alcohol which occurs in the form of isolated islets, and, on the other hand, efficiently counteracts or prevents the transport of liquid through the laminated packaging material 10. The quantity of hydrophobic polymer in the polyvinyl alcohol layer 14 should be at least 5 per cent, preferably between 5 and 50 per cent of the total dry weight of the polyvinyl alcohol layer 14. Most preferably, the quantity of hydrophobic polymer constitutes 20 per cent of the total dry weight of the polyvinyl alcohol layer, while the quantity of polyvinyl alcohol correspondingly constitutes 80 per cent of the total weight of the polyvinyl alcohol layer.

The illustrated packaging material 10 in Fig. 1 may be produced in the manner which is schematically illustrated in Fig. 2 in which, for purposes of clarity, the same reference numerals as in Fig. 1 have been employed for identical or corresponding parts.

A web 11 of paper or paperboard is unwound from a magazine reel 11' and is led past an applicator 15 (preferably a coat applicator) disposed adjacent the web and by means of which a solution or dispersion of polyvinyl alcohol and a hydrophobic polymer is applied to one side of the web in the form of continuous layer 14. The quantity of the solution or dispersion which is applied may vary, but the solution or dispersion, respectively, is preferably applied in such a quantity that a well integrated and unbroken layer is formed after drying. Dispersion coating methods are generally known, by persons skilled in the art, to facilitate coating of very thin layers in comparison to for example extrusion coating methods. Dispersion coating layers as thin as 1 µm, and even less than 1 µm, can be obtained, while extrusion coated layers thinner than 5 µm are impossible to achieve.

The web 11 is led further past a drying apparatus 16 acting on the coated side of the web 11, for example an infrared drier, or a hot air unit for driving off water and drying the applied layer 14.

Preferably, the dried web is then heated to at least 100 °C, preferably between 100 and 200 °C, most preferably to at least 170 °C, in order to "post-dry" or "post-cure" the applied layer 14. It has surprisingly been discovered that such a post-cure treatment results in significantly improved oxygen barrier properties as well as improved water resistance.The heat treatment may be of short duration, such as corresponding to web speeds normally used in production. The higher the post-curing temperature, the higher water and moisture resistance the layer 14 will generally attain. According to one preferred embodiment, wherein a coating from a mixture of polyvinylalcohol and approximately 20 weight-% EAA is coated, dried and then post-cured to approximately 170 °C, the resulting layer 14 is practially water-proof and the oxygen barrier properties at 23 °C and 50 % RH, 1 atm. is improved to below 3,42 cc/m2, during 24 hours, by the Ox-tran 1000 flat sample method. The oxygen permeation value for the correspondning non post-cured sample is 5,13 cc/m2, during 24 hours. The postcure heat treatment also results in substantially improved adhesion, in particular compared with a pure polyvinylalcohol layer, of the layer 14 to a polymer core layer, such as a polyethylene layer, regardless if the polyethylene layer is a film or a melt extruded layer. The improved adhesion is not impaired by a moist or damp, even wet, environment.
According to another preferred embodiment of the present invention, the web 11 is coated with a first primer layer of for example polyethylene before the barrier layer 14 is applied. The corresponding Ox-tran test results after coating with the same polyvinylalcohol-EAA dispersion, drying and subsequent heat treatment at 170 °C have oxygen permeation values of less than 1 cc/m2, during 24 hours.
Significantly improved oxygen and water barrier properties are achieved when functional groups are not included in the hydrophobic polymer, such as in the case of a polyolefin or a styrene-butadiene copolymer. This is believed to result from an increase in density of the barrier layer resulting from fusion of the two. polymer phases by the heat treatment, thus forming a homogenous polymer alloy with a dense structure.

The coated, dried web 11 is finally led through the nip between two rotary rollers 17 at the same time as thin plastic films 12 and 13, preferably polyethylene, are extruded onto both sides of the web 11 with the aid of extruders 18 and 19, for the formation of the finished laminated packaging material 10 displaying the material structure schematically illustrated in Fig. 1.

From a sheet or web-shaped laminated packaging material 10 which, preferably in a per se known manner, is provided with fold-facilitating crease lines, decorative artwork etc., liquid-tight, dimensionally stable packaging containers are produced in a per se known manner using conventional, rational packaging machines of the type which form, fill and seal the finished packages. From, for example, a web of the laminated packaging material 10, packages are thus produced in that the web is first reformed into a tube by both longitudinal edges of the web being united to one another in a so-called overlap joint seam. The tube is filled with the relevant contents and is divided into individual packages by repeated transverse sealing of the tube transversely of the longitudinal axis of the tube and beneath the level of the contents in the tube. The packages are separated from one another by incisions in the transverse sealing regions and are given the desired geometric, normally parallelepipedic, final form by means of an additional fold forming and sealing operation for obtaining the finished packaging containers.

It will thus have been apparent from the foregoing description that the present invention, in a simple manner and using simple means, attains the established objects and realises an efficiently laminated packaging material possessing superior gas barrier properties, without the employment of chemical cross-linking agents for protecting the polyvinyl alcohol included in the gas barrier layer.

## Claims

1. A method of producing a laminated packaging material comprising a core layer (11) and a barrier layer (14) of polyvinyl alcohol applied on one side of the core layer, **characterized in that** a web of paper or paperboard is coated on one side with a layer (14) of a composition comprising a hydrophobic polymer devoid of cross-linking functional groups and an aqueous solution of polyvinyl alcohol, that the thus coated web is dried for driving off water, and **in that** the web after said drying operation is heat treated at a temperature of at least 100°C.

2. A method as claimed in Claim 1, **characterized in that** the web is, after said drying operation, heat treated at a temperature of at least 170°C.

3. A method as claimed in Claim 1 or 2, **characterized in that** the aqueous solution is applied to the web by a dispersion coating process.

4. A method as claimed in any of Claims 1 to 3, **characterized in that** the web is, after said drying, coated on both sides of the core layer (11) with thermoplastic.

5. A method as claimed in Claim 4, **characterized in that** the web is coated by extrusion of said thermoplastic.

6. A method as claimed in Claim 4 or 5, **characterized in that** said thermoplastic consists of polyethylene.

## Patentansprüche

1. Verfahren zur Herstellung eines mehrschichtigen Verpackungsmaterials, aufweisend eine Kernschicht (11) und eine Sperrschicht (14) aus Polyvinylalkohol, die auf einer Seite der Kernschicht aufgebracht wird, **dadurch gekennzeichnet dass**, eine Bahn aus Papier oder Karton auf einer Seite mit einer Schicht (14) aus einer Zusammensetzung, die ein hydrophobes Polymer ohne vernetzende Funktionsgruppen und eine wässrige Lösung von Polyvinylalkohol enthält, beschichtet wird, dass die so beschichtete Bahn getrocknet wird, um Wasser zu entfernen, und dass die Bahn nach dem Trocknen bei einer Temperatur von wenigstens 100° wärmebehandelt wird.

2. Verfahren nach Anspruch 1, **dadurch gekennzeichnet, dass** die Bahn nach dem Trocknen bei einer Temperatur von wenigstens 170°C wärmebehandelt wird.

3. Verfahren nach Anspruch 1 oder 2, **dadurch gekennzeichnet, dass** die wässrige Lösung auf die Bahn durch ein Dispersionsbeschichtungsverfahren aufgebracht wird.

4. Verfahren nach einem der Ansprüche 1 bis 3, **dadurch gekennzeichnet, dass** die Bahn nach dem Trocken auf beiden Seiten der Kernschicht (11) mit Thermoplast beschichtet wird.

5. Verfahren nach Anspruch 4, **dadurch gekennzeichnet, dass** die Bahn durch Extrusion mit dem Thermoplast beschichtet wird.

6. Verfahren nach Anspruch 4 oder 5, **dadurch gekennzeichnet, dass** das Thermoplast aus Polyethylen besteht.

## Revendications

1. Procédé de production d'un matériau d'emballage stratifié comprenant une couche de coeur (11) et une couche barrière (14) d'alcool de polyvinyle appliquée sur un côté de la couche de coeur, **caractérisé en ce qu'**une toile de papier ou de carton est revêtue sur un côté d'une couche (14) d'une composition comprenant un polymère hydrophobe sans groupes fonctionnels de réticulation et une solution aqueuse d'alcool de polyvinyle, **en ce que** la toile ainsi revêtue est séchée pour éliminer l'eau, et **en ce que** la toile après ladite opération de séchage est traitée à la chaleur à une température d'au moins 100°C.

2. Procédé selon la revendication 1, **caractérisé en ce que** la toile est, après ladite opération de séchage, traitée à la chaleur à une température d'au moins 170°C.

3. Procédé selon la revendication 1 ou 2, **caractérisé en ce que** la solution aqueuse est appliquée à la toile par un processus de revêtement par dispersion.

4. Procédé selon l'une quelconque des revendications 1 à 3, **caractérisé en ce que** la toile est, après ledit séchage, revêtue sur les deux côtés de la couche de coeur (11) d'un thermoplastique.

5. Procédé selon la revendication 4, **caractérisé en ce que** la toile est revêtue par extrusion dudit thermoplastique.

6. Procédé selon la revendication 4 ou 5, **caractérisé en ce que** ledit thermoplastique est constitué de polyéthylène.
